# EUROPEAN PATENT APPLICATION

(11) **EP 1 022 676 A2**
(43) Date of publication of application: **26.07.2000**
(21) Application number: 00100299.7
(22) Date of filing: 20.01.2000
(51) Int. Cl.: G06K 15/12, G03B 27/50, H04N 1/387, B41J 2/465

(54) **Optical shutter**

(30) Priority: 22.01.1999 JP 1407699
(71) Applicant: Citizen Watch Co., Ltd., Tokyo 163-0428 (JP)
(72) Inventor: Matsunaga, Masaaki, Tokyo (JP); Shiota, Akira, Omiya-shi, Saitama (JP)
(74) Representative: Wilhelm & Dauster Patentanwälte European Patent Attorneys

(57) **Abstract**

An optical shutter used for an optical printer of a line scanning type, in which a black mask is formed in each pixel as well as between pixels thereby to improve the quality and reproducibility of the printed image, is disclosed.

## Description

### BACKGROUND OF THE INVENTION

### 1. Field of the Invention

The present invention relates to an optical shutter used with an optical apparatus such as an optical printer.

### 2. Description of the Related Art

An optical apparatus, which records or reproduces image data by using light, such as a recording apparatus or a display apparatus having an optical shutter for controlling the passage of the light from the light source and thereby recording or reproducing image data is known. One such apparatus is an optical apparatus of a line scanning type for controlling the passage of a linear luminous flux by an optical shutter and scanning the luminous flux onto a recording medium or a display medium in a direction perpendicular to the linear luminous flux. An optical shutter of a line scanning type can process one frame which comprises n x m image data by scanning m lines of n pixels aligned along a line. For this reason, an optical shutter of line scanning type can reproduce a high-definition image with a configuration simpler than an optical shutter configured with a matrix-type liquid crystal panel. Thus, the use of an optical apparatus such as an optical printer or an electrophotographic apparatus of line scanning type using an optical shutter has been extending.

### SUMMARY OF THE INVENTION

An object of the present invention is to prevent fringes from being generated in images regardless of the image data formed on the light receiving means of the conventional optical apparatus of line scanning type. Another object of the invention is to provide means, included in an optical apparatus of line scanning type, for improving the quality and reproducibility of the image formed on the light-receiving means of the optical apparatus.

To attain the above objects, an optical shutter according to the present invention is formed with at least a black mask in each pixel as well as between pixels.

In order to attain the objects described above, according to the invention, there is provided an optical shutter for controlling the passage of the linear luminous flux of an optical apparatus, the optical shutter comprising a plurality of pixels along the line, and each pixel being segmented into a plurality of aperture areas by a plurality of shading portions formed along the direction perpendicular to the line, each of the aperture areas being capable of either passing or cutting off the light.

According to the invention, the portions of the optical shutter partitioning the pixels are preferably shaded.

Further, in the optical shutter according to the invention, the pitch of the aperture areas in the pixels partitioned by the shading portions between the pixels is preferably equal to the pitch of the shading portions.

Furthermore, preferably, the optical shutter according to the invention comprises two transparent substrates and a liquid crystal held between the substrates, wherein a common electrode formed on one substrate is overlapped with a plurality of signal electrodes formed on the other substrate thereby to form a plurality of pixels, and the shading portions partitioning the pixels and the shading portions within the pixels are both formed of an opaque metal film.

### BRIEF DESCRIPTION OF THE DRAWINGS

The above objects and features of the present invention will be more apparent from the following description of the preferred embodiments with reference to the accompanying drawings wherein:
Fig. 1 is a model diagram showing an image pattern of an optical shutter according to an embodiment of the present invention;
Fig. 2 is a model diagram showing an image pattern of an optical shutter according to a reference embodiment of the present invention;
Fig. 3 is an exploded perspective view showing a configuration of a liquid crystal shutter;
Fig. 4 is a schematic diagram showing a configuration of an optical printer of line scanning type; and
Figs. 5A and 5B are schematic diagrams showing the bending of a luminous flux due to diffraction.

### DESCRIPTION OF THE PREFERRED EMBODIMENTS

Before describing the embodiments of the present invention, the related art and the disadvantages therein will be described with reference to the related figures.

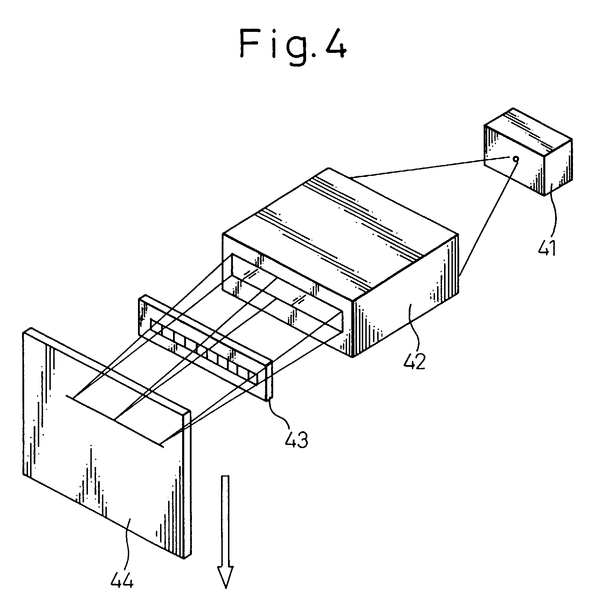

The conventional optical apparatus of line scanning type has the following problems. Fig. 4 is a schematic diagram showing a configuration of an optical printer constituting an example of a conventional optical apparatus of line scanning type. In Fig. 4, reference numeral 41 designates a light source utilizing the light generation of a light-emitting diode or the like, numeral 42 an optical path changing means having a lens or the like for converting the light emitted from the light source 1 into a linear luminous flux, and numeral 43 an optical shutter including a plurality of pixels arranged along a line for controlling the passage of the linear luminous flux emitted from the optical path changing means 42. Numeral 44 designates a photosensitive paper constituting light-receiving means configured to move relatively in the direction perpendicular to the line. The open and closed states of each pixel of the optical shutter 43 are controlled in accordance with the input signal, so that the transmitted light is emitted at the timing of each line and forms a two-dimensional image on the relatively moving light receiving means 44.

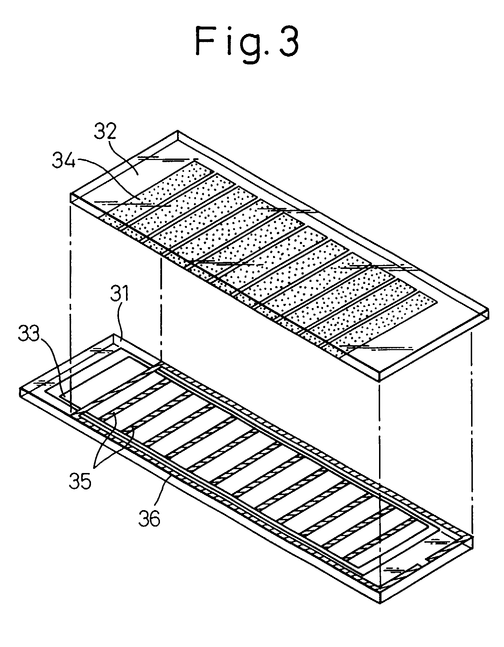

The relation between the image quality of the two-dimensional image and the optical shutter 43 will be explained below with reference to the case in which the conventional liquid crystal shutter of line type is used as the optical shutter 43. Fig. 3 is an exploded perspective view showing a configuration of the conventional liquid crystal shutter of line type. In Fig. 3, numeral 31 designates a lower glass substrate, numeral 32 an upper glass substrate, numeral 33 a scanning electrode formed of a transparent electrode on the upper surface of the lower glass substrate 31, and numeral 34 signal electrodes formed of a transparent electrode on the upper surface of the upper glass substrate 32. Numeral 35 designates black masks made of a chromium film arranged on the upper surface of the lower glass substrate 31. Numeral 36 designates an epoxy resin seal formed on the upper surface of the lower glass substrate 31. The lower glass substrate 31 and the upper glass substrate 32 are coupled to each other by the epoxy resin seal 36, and a liquid crystal such as the STN liquid crystal is filled and sealed in the space between the upper and lower glass substrates by a well-known method thereby to form a liquid crystal layer. The lower glass substrate 31 and the upper glass substrate 32 each have, though not shown, an alignment member and a deflection member, as required.

As shown in Fig. 3, a plurality of transparent signal electrodes 34 are aligned along the length of the panel. Each signal electrode 34 is overlapped with the scanning electrode 33, and the transmission of light in the overlapped portion of the liquid crystal layer is controlled by the voltage applied between the electrodes. Specifically, a pixel is formed in each overlapped portion. A plurality of pixels are aligned along the length of the liquid crystal shutter configured with the lower glass substrate 31 and the upper glass substrate 32. The gap between each pixel and an adjacent pixel is shaded by the black mask 35. The black masks are provided in order to prevent the light leakage from the pixel gaps and thereby to prevent the deterioration of the contrast of the reproduced image formed on the light-receiving means 44 shown in Fig. 4.

The linear luminous flux that has been transmitted through the pixels moves relative to the light-receiving means 44, and therefore an area where the light is cut off due to the black masks 35 exists between adjacent pixels along the line. As a result, an area corresponding to the light cutoff area having no image is formed as a pattern of fringes parallel to the direction of scanning in the two-dimensional image formed on the light-receiving means 44. This pattern of fringes is not related to the image data to be reproduced, and deteriorates both the quality and the reproducibility of the two-dimensional image formed on the light-receiving means 44.

### [Embodiments]

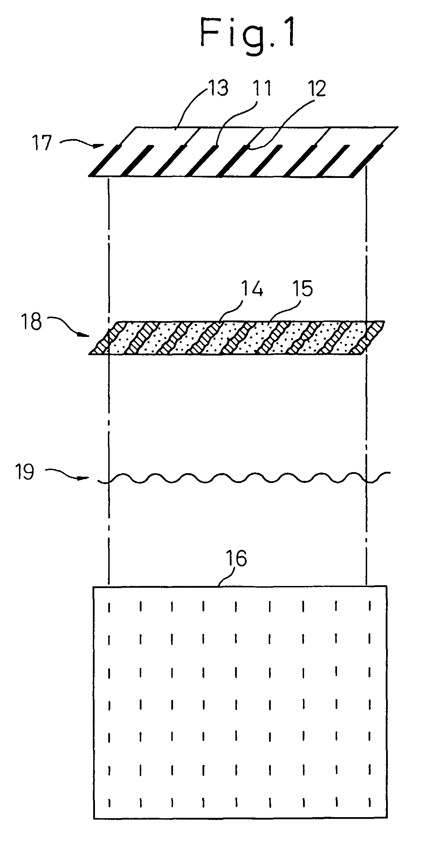

The present invention is intended to improve the quality of the printed image by inserting a black mask in each pixel of the optical shutter. An embodiment of the invention will be explained below with reference to the drawings. In Fig. 1, numeral 17 designates an optical shutter with black masks inserted in the pixels, numeral 13 a single pixel, numeral 12 black masks between pixels, and numeral 11 black masks in the pixels. Numeral 18 designates a projected image formed on the light-receiving means when it is exposed to the light radiated substantially parallel to the optical shutter designated by numeral 17. The edge portions of each of the shadows 14 of the black mask are blurred due to the bending of the luminous flux and develop a light fog in the pixel areas 15 where no shadow would otherwise be formed.

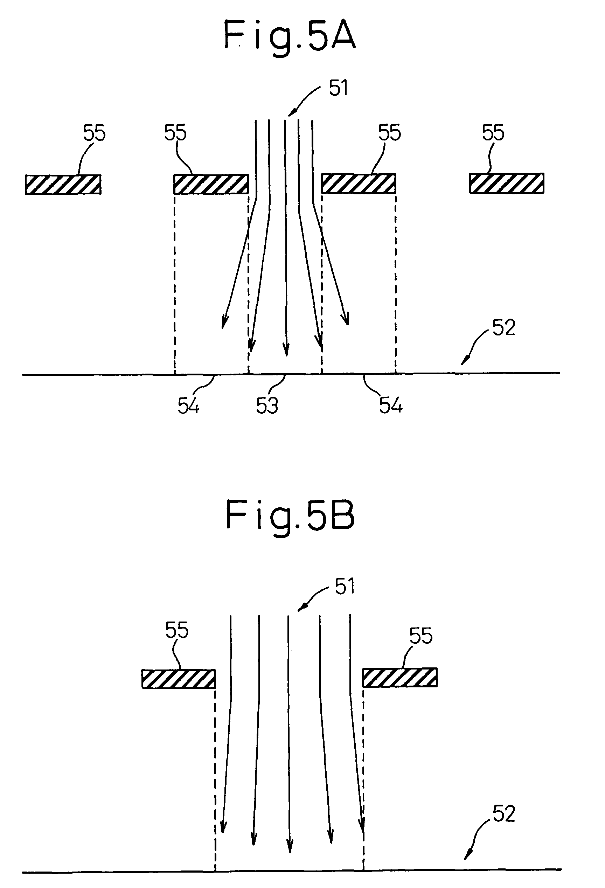

This phenomenon will be explained below with reference to Fig. 5A. In Fig. 5A, numeral 51 designates a luminous flux, and numeral 52 a light-receiving surface of an instant film or the like constituting the light-receiving means.

This phenomenon occurs due to the fact that the pitch of the black masks 55 is narrow and therefore the luminous flux is easily bent by diffraction. Thus, the light radiated on the area 53 which would otherwise be free of the effect of the black masks 55 is reduced, while the area 54 which should be shaded by the black mask 55 is exposed to an increased amount of light.

Specifically, as indicated by 19 in Fig. 1, the intensity of the light radiated on the light-receiving means such as the instant film forms a band of contrast having a gentle curve like a sinusoidal one. As a result, as shown in Fig. 1, the printed image 16 formed on the light-receiving means moving relatively with the optical shutter is substantially free of fringes which otherwise might be caused by the shadow of the black masks.

The optical shutter according to this embodiment is a liquid crystal shutter comprising two transparent glass substrates, a liquid crystal held between the two substrates, a common transparent electrode formed on one of the glass substrates, and a plurality of transparent signal electrodes formed on the other glass substrate, wherein pixels are formed by the overlapped state of the transparent signal electrodes. A shading portion made of an opaque metal film of chromium is formed in the gap between the pixels and within each of the pixels. The black masks forming the shading portions are arranged at pitches which is substantially one half the width of the pixel, e.g. 80 microns.

The liquid crystal shutter according to an embodiment of the invention was built into an optical apparatus of a line scan type, and an image-forming test was conducted using an instant film (Spectra, a trade name) from Polaroid. Specifically, as shown in Fig. 4, the light from a light-emitting diode 41 is converted into a linear luminous flux by a light path changing means 42 having a lens, etc. and the liquid crystal shutter according to the invention is arranged in the position of the optical shutter 43 for modulating the luminous flux on the line. The light-receiving means 44 (Spectra) was moved at fixed speed in the direction perpendicular to the linear luminous flux modulated by the liquid crystal shutter according to the invention, thereby forming various two-dimensional images on the light-receiving means 44. The wavelength of the red light from the light-emitting diode 41 is 650 nm, that of the green light is 560 nm and that of the blue light is 450 nm.

The two-dimensional images such as a close up view of the human face, a landscape and a test pattern formed on Spectra were checked both visually and through a magnifier. As a result, the pattern of fringes which are seen in the prior art could not be observed either visually or through the magnifier. Thus, a clear, high-definition image with a high contrast ratio between white and black levels was formed with a natural, smooth contour of a human face, for example.

In the liquid crystal shutter according to this embodiment, the pattern of fringes can be erased by a single mask in each pixel. With an ordinary film or an instant film of high resolution, however, a plurality of black masks are arranged effectively in a pixel. For the 669 instant film from Polaroid, for example, an arrangement of two black masks in a pixel can erase the pattern of fringes. Also, in a liquid crystal shutter having a relatively rough arrangement with pixels of 200 microns or more, the provision of a plurality of black masks in a pixel can very effectively contribute to a high definition of the image. In other words, the width, along the line, of each aperture area is desirably kept at 100 microns or less by providing at least a black mask.

This embodiment of the invention has been explained with reference to the case of a liquid crystal shutter used as an optical shutter. The technique of providing a black mask in a pixel, however, is applicable to any other type of optical shutter device. In a PLZT device of ceramic ferromagnetic material, a fluorescent character display tube or a flat CRT device, for example, high definition of the image can, of course, be secured by providing a minuscule black mask in each pixel.

### [Reference]

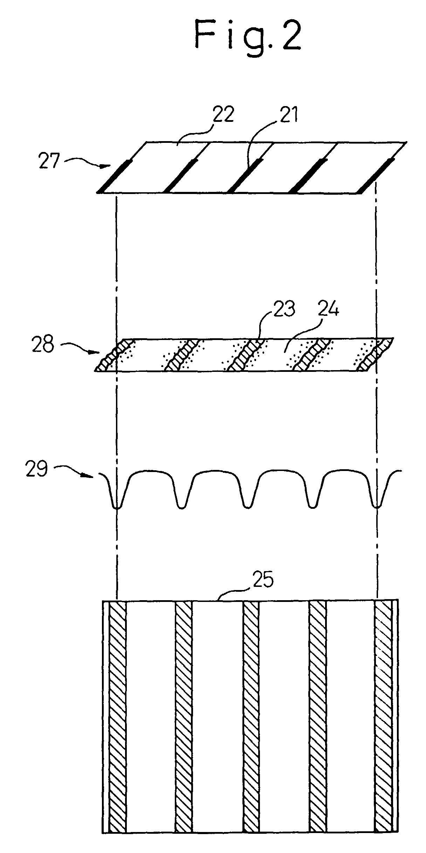

An image formed by use of an optical shutter having no black mask in the pixels is shown as a reference in Fig. 2. In Fig. 2, numeral 27 designates an optical shutter having no black mask in pixels, numeral 22 a single pixel, and numeral 21 a black mask inserted between pixels. Numeral 28 designates the projection formed on the light-receiving means when the optical shutter designated by numeral 27 is exposed by the light substantially parallel thereto. Each shadow 23 of the black mask area is blurred at edge portions thereof due to the bending of the luminous flux due to diffraction. Also, a light fog is developed in the pixel area 24 where no shadow would otherwise form. In the projection 28, however, the light fog area is confined to the neighborhood of the original shadow 23 of each black mask. This is due to the fact that the pitch of the black mask is so wide that the luminous flux is not easily bent by the diffraction as shown in Fig. 5B, unlike in the aforementioned embodiment.

For this reason, as indicated by 29 in Fig. 2, the intensity of the light radiated on the light-receiving means such as the instant film forms a clear band of contrast around each black mask area. As a result, as shown in Fig. 2, a pattern of fringes due to the shadow of the black masks is clearly recognized on the printed image 25 formed on the light-receiving means as a result of the movement thereof relative to the optical shutter.

The optical shutter according to the cited reference is a liquid crystal shutter, in which a liquid crystal is held between two transparent glass substrates, and pixels are formed by the overlapped relation between a common transparent electrode arranged on one of the glass substrates and a plurality of transparent signal electrodes arranged on the other glass substrate. Each shading portion is formed of an opaque metal film of chromium only in the gaps between pixels. The black masks are arranged in the shading portions at the same pitches, 160 microns, as the pixels.

The liquid crystal shutter according to the cited reference was built in an optical apparatus of line scanning type, and an image-forming test was conducted using an instant film (Spectra, trade name) from Polaroid. Specifically, as shown in Fig. 4, the light from a light-emitting diode 41 is converted into a linear luminous flux by a light path changing means 42 having a lens, etc. and the liquid crystal shutter is arranged in the position of the optical shutter 43 for modulating the luminous flux on the line. The light-receiving means 44 (Spectra) was moved at fixed speed in the direction perpendicular to the linear luminous flux modulated by the liquid crystal shutter, thereby forming various two-dimensional images on the light-receiving means 44.

The two-dimensional images such a close up view of the human face, a landscape and a test pattern formed on Spectra were checked both visually and through a magnifier. As a result, the pattern of fringes which are seen in the prior art could be observed clearly through a magnifier but not clearly visually. The resulting image has an insufficient contrast ratio between white and black levels and, with an unclear hue, the image of a face, for example, has a rough halftone area.

It will thus be understood from the foregoing description that the use of an optical shutter having a black mask within each pixel, according the invention, can form a clear, high-definition image with a high contrast ratio free of fringes, on the light-receiving means.

## Claims

1. An optical shutter comprising:
a plurality of pixels arranged in a line for controlling the passage and cutoff of light; and
a plurality of shading portions formed in a direction perpendicular to said line along which said plurality of the pixels are formed, said shading portions dividing each of said plurality of pixels into a plurality of aperture areas.

2. The optical shutter of claim 1, wherein
a plurality of partitioning portions for partitioning each of said plurality of the pixels are shaded.

3. The optical shutter of claim 2, wherein
said plurality of aperture areas defined by said plurality of partitioning portions and said plurality of shading portions are formed substantially at equal pitches over the entire range of said optical shutter.

4. The optical shutter of claim 3, further comprising,
a first transparent substrate having a common electrode,
a second transparent substrate having a plurality of signal electrodes, and
a liquid crystal held between said first and second transparent substrates,
wherein said common electrode and said plurality of signal electrodes are overlapped with each other thereby to form said plurality of the pixels, and said partitioning portions and said shading portions are formed of an opaque metal film.
